(19) Europäisches Patentamt
European Patent Office
Office européen des brevets

(11) Publication number: **0 030 372**
**B1**

# (12) EUROPEAN PATENT SPECIFICATION

(45) Date of publication of patent specification: **16.10.85**

(51) Int. Cl.[4]: **G 05 D 23/19,** G 03 G 15/20

(21) Application number: **80107615.9**

(22) Date of filing: **04.12.80**

(54) **Electrophotographic copier.**

(30) Priority: **11.12.79 US 102508**

(43) Date of publication of application:
**17.06.81 Bulletin 81/24**

(45) Publication of the grant of the patent:
**16.10.85 Bulletin 85/42**

(84) Designated Contracting States:
**DE FR GB**

(56) References cited:
**EP-A-0 006 553**
**EP-A-0 011 863**
**DE-A-2 742 537**
**US-A-3 491 283**
**US-A-3 878 358**
**US-A-3 961 236**

**Patents Abstracts of Japan Vol. 3, No. 117, 29 September 1979 page 142E141**

(73) Proprietor: **International Business Machines Corporation**
**Old Orchard Road**
**Armonk, N.Y. 10504 (US)**

(72) Inventor: **Cunningham, Joseph Edwin, Jr.**
**4791 Dorchester Circle**
**Boulder Colorado 80301 (US)**
Inventor: **Gianos, Philip Theodore**
**1505 Wildwood Lane**
**Boulder Colorado 80303 (US)**

(74) Representative: **Lancaster, James Donald**
**IBM United Kingdom Patent Operations**
**Hursley Park**
**Winchester, Hants, S021 2JN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 030 372 B1

**Description**

The invention relates to an electrophotographic copier having an electrically heated fuser and a control apparatus for regulating the temperature of the fuser.

In an electrophotographic apparatus, for example a xerographic copier, a pattern of toner is placed on paper in accordance with an image on an original document. The toner is fixed on the paper to form a permanent copy of the original image by applying a combination of heat and pressure to the toner and paper. For example, in a typical copier, the paper carrying loosely adhering toner is passed between a heated fuser roll and a backup roll to essentially melt the toner into the paper.

The quality of the result depends upon the temperature to which the paper is brought during the fusing operation. At the extremes, too high a temperature will undesirably remove toner from the paper, while too low a temperature will fail to properly bond the toner to the paper. In practical systems, a major problem is non-uniformity of heat application over the duration of a "copy run" i.e., during the copying of one or more originals in a single continuous operator-initiated job. Successive sheets of paper may reach different temperatures, not all within the acceptable range, and different sizes of paper may reach different temperatures at different times. Further, within a copy run, not all parts of the same sheet of paper will be within the acceptable range of temperature during the entire fusing operation, resulting in a wide spectrum of quality problems involving the paper and toner. These problems are believed to be due to many factors, such as: differing thermal load presented by different qualities, sizes and weights of paper; materials and environmental factors affecting the thermal transfer between the fuser surface and the paper; and the degree of temperature control achieved at the surface where the paper contacts the fuser.

A physically massive fuser roll will eventually reach a stable surface temperature which is substantially independent of external factors such as the size and quantity of paper placed in contact with it or the rate at which the paper is fed past the roller. However, copier size, energy availability and time-to-first-copy restrictions dictate that a fuser roll be as physically small as possible. Commercial couplers acceptable in an office environment ideally must be physically small, cannot generate excessive quantities of heat and must be connectable to a conventional electrical power outlet. The fuser heater is often a major source of heat and user of electrical energy, and the size of the fuser is a significant factor in the size of the copier. A small fuser is desirable at least because it generates less heat, uses less power, takes up less space. However, the smaller the fuser roll mass relative to the mass of the copy paper, the greater will be the thermal load effect of the paper on the roll. That is, each sheet will have a greater cooling effect on a small roll than on a large roll. The technique used to maintain the fuser roll at a constant temperature, regardless of external thermal factors, thus becomes extremely important for a fuser roll of smaller mass. This is especially the case where a large thermal load can arise, e.g., as in a fast copier, in which many sheets of paper are rapidly fed through the fuser.

The prior art discloses a number of approaches to the problem of accurately controlling fuser temperature. The simplest prior art approach provides an on-off thermostat in series with the fuser heater. While this provides control of fuser temperature, on-off cycling does not give the accuracy required by compact and fast copiers, even where the thermostat is extremely accurate. The primary disadvantage of on-off cycling is that the peak power requirements are significantly greater than the average power used for heating. Thus, a copier with an on-off thermostat may need to be connected to an undesirably large current source. For example, a typical commercial copier with an on-off thermostat may require a dedicated power circuit capable of supplying as much as 3—5 kilowatts. This large power requirement is determined in part by "worst case" fuser conditions, such as the age of the heating element, original manufacturing tolerances and line voltage variations.

Another prior art approach is to supply only a portion of each power cycle of an alternating supply to heat the fuser. The portions are selected as a function of the fuser temperature sensed by a thermostat. Shortcomings of this approach are that, since it requires electronic switching of substantial load currents, physically large electrical parts are required, energy may be wasted and undesirable electromagnetic radiation occurs.

Some specific examples of prior art are briefly commented on. In U.S.—A—3,961,236, accuracy is increased by monitoring fuser heater voltage and current and then adjusting input power to maintain power consumption constant. Adjustment is obtained by controlling the number of complete alternating current half-cycles supplied by a power source to the fuser. Since the load current is supplied in complete half-cycles, switching of the load current may be accomplished at zero-crossings to greatly reduce component size, electromagnetic noise and, in some cases, energy dissipation.

A lamp dimmer disclosed in U.S.—A—3,691,404 selects groups of alternating current cycles in accordance with digital quantities chosen by manually adjusting a switch. The cycles are switched at zero-crossings. U.S.—A—3,259,825 shows a servo drive wherein varying numbers of positive half-cycles are selected at zero-crossings as a function of a control voltage. U.S. Patent No. 3,456,095 selects the frequency at which positive half-cycles of power are supplied to a heater as a function of signals from a heat sensor.

Typical problems of such prior art approaches are that high instantaneous or average currents are switched, special electrical supply sources are required, electromagnetic noise is generated, fuser temperature is not sensed, undesirable direct current components are present (when the difference between the numbers of positive and negative half-cycles is not zero), large physical size is necessary, finely graduated adjustments are not possible, manual intervention is required, etc.

U.S.—A—3,878,358 relates to regulating fuser temperature in a copier, and the introductory part of claim 1 is based on it. The technique can be regarded as involving the comparison of the current fuser resistance with a predetermined sequence of resistances, selected in turn in a cycle. This US Patent does not disclose spreading the generated pulses throughout the cycle, and using one sensed fuser temperature for the whole cycle, these techniques providing an important improvement in the fuser temperature regulation.

Document EP—A—6553 discloses regulating fuser temperature in a copier. It has an earlier priority date than the present application, but was first published after the priority date of the present application, and is therefore only to be considered in relation to novelty and not inventive step of the present invention. The regulation temperature is based on comparing the fuser temperature with a single predetermined temperature value (T2), see elements 215 and 219 of Fig. 9B), rather than with a predetermined sequence of signals as in the present invention.

EP—A—11863 discloses regulating fuser temperature in a copier. It also has an earlier priority date than the present application, but was first published after the priority date of the present application, and is therefore only to be considered in relation to novelty and not inventive step of the present invention. The regulation technique is based on determining the analogue temperature of the fuser, converting the analogue temperature to a five bit code, and gating power pulses to the fuser depending on the current five bit code. There is no comparison of the fuser temperature with a predetermined sequence of signals as in the present invention.

U.S.—A—3,491,283 discloses regulating the application of pulses to a load by a technique which has some similarities to EP—A—11863. There is no comparison of a digital control value with a predetermined sequence of signals, but the technique provides spacing of generated pulses per cycle.

In the drawings:—

Figure 1 is an overall view of a fuser temperature control system according to the invention;

Figure 2 is a circuit diagram of part of the system of Figure 1;

Figure 3 is a block circuit diagram of another part of the system of Figure 1;

Figures 4A and 4B are detailed block circuit diagrams relevant to Figure 3; and

Figure 5 is a very general flow diagram of operations performed in the system.

Referring to Figure 1, there is shown an overall view of a fuser temperature control system for a copier utlilizing the invention described herein. A fuser roll 1 of conventional metallic construction is heated by a heater 2. The heater 2 is conventionally a source such as a lamp, or a series of high temperatures wires, supplied by a power supply 3 providing an alternating voltage $V_{AC}$. The power supply is selectively connectable to the heater 2 by operation of a switching triac 7. The temperature of the fuser roll is sensed by a sensor 4 which supplies analog signals to the detection logic 5. Detection logic 5 serves to eliminate noise and convert the analog voltage to digital data representations utilizable by processing logic 6, which gates the triac 7. Control signals received by the processing logic 6 are digital data representations from the detection logic 5, representing fuser roll 1 temperature, and signals on line 8 indicating the alternating line voltage from the power supply 3.

The purpose of the system shown in Figure 1 is to control the temperature of the fuser roll 1, with a selective degree of control. For example, the degree of control required during normal copy runs is more stringent than that required during "standby" operations when the copier is awaiting use.

Broadly, the processing logic 6 operates the traic 7 to supply to the heater 2 selected ones of the half-cycles from the power supply 3. The processing logic 6 selects those half-cycles necessary to maintain the fuser roll 1 at a temperature within a tolerance range depending on the current mode of operation of the copier, while minimizing the difference between the number of positive and negative half-cycles selected to: (a) provide as small a DC component to the heater 2 as possible and (b) to keep the average current over short periods close to the average current over longer periods. For example, during standby operation, the processing logic may operate the triac 7 to supply between 0 percent and 100 percent of the maximum power available from the power supply 3 to the heater 2, the supply being incremented in steps ranging from a few percent to greater than 50 percent. During copying operations, however, the supply is incremented in steps never exceeding a few percent.

The amount of power utilized by the heater 2 has been empirically determined for a typical gas-filled lamp. For such a lamp, the power radiated out of the lamp is approximately shown by the following relationship based on Moon's equations:

$$P = (P_O)\left[\frac{(V_{AC} - V_{TRIAC})\Big/\frac{N}{M}}{V_O}\right]^{1.543}$$

where:

| | |
|---|---|
| P | Radiant power out |
| $P_o$ | Rated maximum power of lamp at $V_o$ |
| $V_{AC}$ | Voltage (RMS) available from power supply 3 |
| $V_{TRIAC}$ | Voltage across triac 7 |
| N | Number of power supply half-cycles selected |
| M | Number of power supply half-cycles in the set from which N is selected |
| $V_o$ | Rated voltage of the lamp |

Assuming that a (theoretically 100 percent efficient) lamp having a rating of 700 watts ($P_o$) at 127 volts ($V_o$) RMS is used and that a sequence of 32 half-cycles (16 cycles) of the power supply is taken as a set (M) the following table shows the percentage of power radiated by the lamp as a function of the number of half-cycles selected.

TABLE I

| N (No. of Half-Cycles on) | Percentage of Full Power (For $V_{TRIAC} = 0$) |
|---|---|
| 0 | 0.0 |
| 1 | 6.90 |
| 2 | 11.78 |
| 3 | 16.10 |
| 4 | 20.11 |
| 5 | 23.88 |
| 6 | 27.49 |
| 7 | 30.96 |
| 8 | 34.32 |
| 9 | 37.58 |
| 10 | 40.76 |
| 11 | 43.87 |
| 12 | 46.92 |
| 13 | 49.91 |
| 14 | 52.84 |
| 15 | 55.74 |
| 16 | 58.58 |
| 17 | 61.39 |
| 18 | 64.15 |
| 19 | 66.89 |
| 20 | 69.59 |
| 21 | 72.26 |
| 22 | 74.90 |

TABLE I (continued)

| N (No. of Half-Cycles on) | Percentage of Full Power (For $V_{TRIAC} = 0$) |
|---|---|
| 23 | 77.51 |
| 24 | 80.09 |
| 25 | 82.18 |
| 26 | 85.20 |
| 27 | 87.72 |
| 28 | 90.21 |
| 29 | 92.68 |
| 30 | 95.14 |
| 31 | 97.59 |
| 32 | 100.00 |

For example, in the above table, if 16 of the 32 available half-cycles in a set are supplied to the lamp 2, the lamp will be operated to radiate 58.58 percent of its full power. If the processing logic 6 is adjusted in accordance with temperature of the fuser roll 1 as sensed by the sensor 4, the number of half-cycles during which the lamp is operated can be changed to maintain the fuser roll 1 temperature within a desired range. For example, if detection logic 5 supplies digital signals to the processing logic 6 indicating that the temperature of the fuser roll 1 has dropped, the processing logic 6 can switch the triac 7 an increased number of times to cause the lamp to be turned on for a larger number of half-cycles. Thus, if the lamp is being turned on for 16 out of 32 half-cycles and the temperature has decreased, the processing logic 6 can cause the triac 7 to turn the lamp 2 on, for example 24 out of 32 half-cycles, causing the lamp to supply 80.09 percent of its full power. If this increased radiation from the lamp 2 causes the fuser roll temperature to rise, the sensor 4 will signal the detection logic 5 of the change and the processing logic 6 will cause the number of half-cycles to decrease. For example, if the temperature rises, the processing logic 6 may signal the triac 7 to pass to the lamp 2 10 out of 32 half-cycles causing the lamp to operate at 40.76 percent of its full power. The processing logic 6 may change the proportion of "on" half-cycles after any full set (M) of 32 half-cycles has been completed.

The foregoing discussion briefly illustrates the utilization of processing logic 6 to select the number of cycles of operation of a lamp 2 to maintain the temperature of a fuser roll 1 within a tolerance range. Still to be described in detail are the techniques of operation of the processing logic 6, the technique for minimizing imbalance between the number of positive and negative half-cycles (causing undesirable DC current components), the technique for avoiding noise generation by switching the triac 7 only at voltage zero-crossings, and the technique for selectively providing different operation for different modes of copier operation.

Referring now to Figures 2 and 3, the detection logic 5 and processing logic 6 will now be described. In Figure 2, the detection logic 5 comprises the sensor 4 configured as a bridge circuit where in a thermistor 21 is provided in one arm of a bridge also containing three resistors, R1, R2 and R3. The thermistor 21 changes its resistance in accordance with the temperature to which it is subjected. The degree of imbalance of the bridge determines an output temperature signal. It will be understood that other temperature sensing techniques can be used, preferably utilizing solid state sensors. Detection logic 5 includes an error voltage generator comprising a resistor R4 and an operational amplifier 22, and an analog-to-digital converter 23 which supplies binary digital data in parallel on lines D0—D3 to processing logic 6 in Figure 3. The example shown herein assumes that the voltage representing the temperature sensed by thermistor 21 is converted into a numerical value represented by binary encoded data on four lines D0—D3 simultaneously. It is not, however, essential to the invention that this particular convention be used because any suitable form of digital representation will suffice.

In Figure 3, the digital data representation D0—D3 from detection logic 5 in Figure 2 is latched in a gated buffer 31 and made available during the period of latching to a comparator 32. It is not essential that D0—D3, available from the latch to the comparator 32, digitally corresponds to the actual temperature sensed on the fuser roll on any particular temperature scale. For example, for simplicity, it may be useful to view D0—D3 as representing the number 15 when the fuser roll 1 is for example at 100 degrees Celsius, and the number 0 when the fuser roll is at 85°C. The comparator 32 also receives bits on four additional lines B0—B3 representing another digital number according to any convenient code. When the comparator 32 detects a predetermined mathematical relationship between D0—D3 and B0—B3 e.g., when the number represented by B0—B3 is greater than or equal to that represented by D0—D3, a signal occurs on its output line connected to operational amplifier 41. Other mathematical relationships are however possible in other embodiments e.g., the reverse relationship to the one given, or an equality relationship only. Broadly the information supplied to the comparator should be selected with the ultimate objective in mind. The signal at the output of the comparator 32 passes through the operational amplifier 41 and an operational amplifier 42 to a pulse transformer 43 before gating the triac 7 in Figure 1. The operational amplifier 41 may be selectively supplied with an override signal for test purposes. The operational amplifier 42 is modulated by a high frequency signal to permit the use of a relatively small pulse transformer 43. The triac 7 is operated for one cycle of the current from the source 3 for each signal from the comparator 32, in accordance with the normal mode of operation of triacs.

The number represented by B0—B3 is determined by the number of the current half-cycle in the set of half-cycles M.

For example, where M equals 32, each half-cycle in the sequence of 32 half-cycles is numbered in sequence from 1 through 32. The current number is compared to the temperature value D0—D3 currently in latch 31. For B0—B3 the address entered in register 38 provides an argument for a table in one of the read-only stores 35 and 36, which argument causes B0—B3 to be supplied to the data-out register 34. For each table, the same B0—B3 will always be found for a particular argument, and two or more different arguments may give the same B0—B3. The necessary accessing operations required to perform the table look-up are performed by a central processing unit 37. The address supplied to the address register 38 is provided by a counter 39 which is stepped by a zero-crossing detector 40 connected by line 8 to the power supply 3 in Figure 1. The zero-crossing detector 40 supplies a signal whenever the power supply voltage from the power supply circuit 3 goes through 0. This not only identifies the beginning of each half-cycle, but also enables all switching operations to occur when the power supply voltage is at or near 0; this reduces noise generation and reduces the necessary size of switching components. The pulses from the zero-crossing detector 40 step the counter 39 to indicate to the address register 38 the sequential number of the half-cycle. For example the first one of 32 half-cycles will cause the number 1 to be entered in the register 38, the second will cause the number 2 to be entered therein, etc.

For each zero-crossing of the power supply 3 a different address is entered into the address register 38, which causes the same or a different number, depending on the table in read-only storage 35 or 36, to be placed in the data-out register 34. Every time a predetermined mathematical relationship is satisfied between the number in the data-out register 34 and the number specified to the comparator 32 by the buffer latch 31, the triac 7 is gated to pass one half-cycle of current to the heater 2. The counter 39 has an output connected to the buffer latch 31 which signals the occurrence of the end of a cycle of operation; that is, when M half-cycles of the power supply 3 have occurred, the buffer latch 31 is gated to enter a new digital data representation D0—D3 of the temperature sensed by the sensor 4. The processing logic 6 has an input for indicating to the central processing unit 37 whether the copier is in standby or run mode. One use of this information is to control the selection of the particular read-only store 35 or 36 which is used effectively for converting the data in the address register 38 to the data in the data-out register 34. For example, read-only storage 35 may be used for standby operations, and a different table in read-only storage 36 may be used when the copier is in a run mode.

For example, reference is made to Table II below where the information necessary to convert data representing half-cycle sequence numbers to data representing power supply half-cycle selection signals is shown for one possible mode of copier operation.

TABLE II

Half Cycles

| | | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | | |
|---|---|---|---|---|---|---|---|---|---|---|---|---|---|---|---|---|---|---|---|---|---|---|---|---|---|---|---|---|---|---|---|---|---|---|---|
| Polarity | | + | − | + | − | + | − | + | − | + | − | + | − | + | − | + | − | + | − | + | − | + | − | + | − | + | − | + | − | + | − | + | − | | |
| Half-Cycle No: | | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | | |
| B Numbers: | | 14 | 15 | 15 | 7 | 10 | 15 | 15 | 4 | 13 | 15 | 15 | 0 | 9 | 15 | 15 | 3 | 6 | 15 | 15 | 15 | 5 | 15 | 15 | 11 | 1 | 15 | 15 | 12 | 2 | 15 | 15 | 8 | | |
| Selected/ Total | Temp Value (D) | | | | | | | | | | | | | | | | | | | | | | | | | | | | | | | | | DC | % |
| 17/32 | 15 | | 1 | 1 | | | 1 | 1 | | | 1 | 1 | | | 1 | 1 | | | 1 | 1 | 1 | | 1 | 1 | | | 1 | 1 | | | 1 | 1 | | −1 | 61.39 |
| 18/32 | 14 | 1 | 1 | 1 | | | 1 | 1 | | | 1 | 1 | | | 1 | 1 | | | 1 | 1 | 1 | | 1 | 1 | | | 1 | 1 | | | 1 | 1 | | +0 | 64.15 |
| 19/32 | 13 | 1 | 1 | 1 | | | 1 | 1 | | 1 | 1 | 1 | | | 1 | 1 | | | 1 | 1 | 1 | | 1 | 1 | | | 1 | 1 | | | 1 | 1 | | +1 | 66.89 |
| 20/32 | 12 | 1 | 1 | 1 | | | 1 | 1 | | 1 | 1 | 1 | | | 1 | 1 | | | 1 | 1 | 1 | | 1 | 1 | | | 1 | 1 | 1 | | 1 | 1 | | +0 | 69.59 |
| 21/32 | 11 | 1 | 1 | 1 | | | 1 | 1 | | 1 | 1 | 1 | | | 1 | 1 | | | 1 | 1 | 1 | | 1 | 1 | 1 | | 1 | 1 | 1 | | 1 | 1 | | −1 | 72.26 |
| 22/32 | 10 | 1 | 1 | 1 | | 1 | 1 | 1 | | 1 | 1 | 1 | | | 1 | 1 | | | 1 | 1 | 1 | | 1 | 1 | 1 | | 1 | 1 | 1 | | 1 | 1 | | +0 | 74.90 |
| 23/32 | 9 | 1 | 1 | 1 | | 1 | 1 | 1 | | 1 | 1 | 1 | | 1 | 1 | 1 | | | 1 | 1 | 1 | | 1 | 1 | 1 | | 1 | 1 | 1 | | 1 | 1 | | +1 | 77.51 |
| 24/32 | 8 | 1 | 1 | 1 | | 1 | 1 | 1 | | 1 | 1 | 1 | | 1 | 1 | 1 | | | 1 | 1 | 1 | | 1 | 1 | 1 | | 1 | 1 | 1 | | 1 | 1 | 1 | +0 | 80.09 |
| 25/32 | 7 | 1 | 1 | 1 | 1 | 1 | 1 | 1 | | 1 | 1 | 1 | | 1 | 1 | 1 | | | 1 | 1 | 1 | | 1 | 1 | 1 | | 1 | 1 | 1 | | 1 | 1 | 1 | −1 | 82.18 |
| 26/32 | 6 | 1 | 1 | 1 | 1 | 1 | 1 | 1 | | 1 | 1 | 1 | | 1 | 1 | 1 | | 1 | 1 | 1 | 1 | | 1 | 1 | 1 | | 1 | 1 | 1 | | 1 | 1 | 1 | +0 | 85.20 |
| 27/32 | 5 | 1 | 1 | 1 | 1 | 1 | 1 | 1 | | 1 | 1 | 1 | | 1 | 1 | 1 | | 1 | 1 | 1 | 1 | 1 | 1 | 1 | 1 | | 1 | 1 | 1 | | 1 | 1 | 1 | +1 | 87.72 |
| 28/32 | 4 | 1 | 1 | 1 | 1 | 1 | 1 | 1 | 1 | 1 | 1 | 1 | | 1 | 1 | 1 | | 1 | 1 | 1 | 1 | 1 | 1 | 1 | 1 | | 1 | 1 | 1 | | 1 | 1 | 1 | +0 | 90.21 |
| 29/32 | 3 | 1 | 1 | 1 | 1 | 1 | 1 | 1 | 1 | 1 | 1 | 1 | | 1 | 1 | 1 | 1 | 1 | 1 | 1 | 1 | 1 | 1 | 1 | 1 | | 1 | 1 | 1 | | 1 | 1 | 1 | −1 | 92.68 |
| 30/32 | 2 | 1 | 1 | 1 | 1 | 1 | 1 | 1 | 1 | 1 | 1 | 1 | | 1 | 1 | 1 | 1 | 1 | 1 | 1 | 1 | 1 | 1 | 1 | 1 | | 1 | 1 | 1 | 1 | 1 | 1 | 1 | +0 | 95.14 |
| 31/32 | 1 | 1 | 1 | 1 | 1 | 1 | 1 | 1 | 1 | 1 | 1 | 1 | | 1 | 1 | 1 | 1 | 1 | 1 | 1 | 1 | 1 | 1 | 1 | 1 | 1 | 1 | 1 | 1 | 1 | 1 | 1 | 1 | +1 | 97.59 |
| 32/32 | 0 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | +0 | 100.00 |

In Table II, the half-cycles are shown sequentially numbered across the top from 0 through 31, with their alternating polarities indicated by the signs "+" and "−". The half-cycle numbers 0—31 are the numbers supplied by the counter 39 to the address register 38. The particular mode of copier operation shown by Table II is a copy run operation where accurate temperature control is essential. The read-only store 36 in the processor 33 is assumed to be selected for this operation. The read-only store 36 stores a table containing as arguments the half-cycle numbers shown in Table II, and the corresponding B numbers (each represented by a particular B0—B3 in Figure 3) shown below them in Table II. For clarity, the B numbers are shown in Table II for positive half-cycles in one row, and for negative half-cycles in a second row. For example, when the counter 39 is set to 0 and supplies a number 0 to the address register 38, the number 14 will be supplied by the read-only store 36 to the data out register 34. When the counter is stepped by the zero-crossing detector 40 to the next number 1, the data out register 34 will receive the number 15. The comparator 32 will give an output signal whenever the B number is greater than or equal to the digital number (D0—D3 in Figure 3) representing the temperature supplied by the buffer latch 31. The digital number representing the temperature supplied to the comparator 32 is chosen to be in the range of 0—15 as shown in the column to the left of Table II. A temperature value of 0 indicates that the temperature of the fuser roll 1 is considerably below the desired temperature, whereas a temperature value of 15 indicates that the difference from the desired temperature is either nonexistent or very small. Whenever the temperature value at the buffer latch 31 is less than or equals the B number at the data out register 34, the comparator 32 sends a signal to the triac 7 causing it to conduct the one-half cycle as shown by a 1 digit in the Table II. In the first column, the B number 14 is greater than or equal to the temperature value in fifteen of the possible sixteen values shown. The only time that this is not true is if the temperature value is 15; that is, the fuser temperature is at or above its desired value 15. Similarly, taking for example the 32nd half-cycle, which is number 31, the B number is 8, which will cause the triac 7 to be gated in nine of the sixteen possible temperature cases.

Still referring to Table II, it can be seen that for a given temperature value, the number of half-cycles during which the triac 7 is operated is predetermined. That is, if the temperature value is 15, the first line of "1's" shows that seventeen out of thirty-two of the half-cycles will be selected. The two right hand columns in Table II indicate the DC component of the current supplied to the heater 2, and the percentage of total power supplied to the heater 2. For a temperature value of 15, the number of negative half-cycles exceeds the number of positive half-cycles by one, and the total average power supplied is 61.39 percent of the full power of the lamp. If the temperature value is the lowest listed, the row numbered 0 indicates that all thirty-two of the available thirty-two half-cycles will be supplied to the lamp, giving 100 percent of the lamp's full power and a DC component of 0. It will be seen that the B numbers are such that the number of half-cycles supplied to the lamp per set of 32 half-cycles i.e., per cycle of operation of the apparatus, varies inversely with the magnitude of the temperature value. In Table II, the difference between the number of positive and negative half-cycles is never more than one. Also the half-cycles supplied to the lamp are spread throughout the apparatus cycle.

Referring now to Table III, the data which may be stored in read-only storage 35 for a standby mode of operation is given.

TABLE III

Half Cycles

| Half-Cycle No: | | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | | |
|---|---|---|---|---|---|---|---|---|---|---|---|---|---|---|---|---|---|---|---|---|---|---|---|---|---|---|---|---|---|---|---|---|---|---|---|
| Polarity: | | + | − | + | − | + | − | + | − | + | − | + | − | + | − | + | − | + | − | + | − | + | − | + | − | + | − | + | − | + | − | + | − | | |
| B Numbers: | | 14 | 14 | 14 | 7 | 10 | 14 | 14 | 4 | 13 | 14 | 14 | 0 | 9 | 14 | 14 | 3 | 6 | 14 | 14 | 14 | 5 | 14 | 14 | 11 | 1 | 14 | 14 | 12 | 2 | 14 | 14 | 8 | | |
| Selected/ Total | Temp Value (D) | | | | | | | | | | | | | | | | | | | | | | | | | | | | | | | | | DC | % |
| 0/32 | 15 | | | | | | | | | | | | | | | | | | | | | | | | | | | | | | | | | +0 | 0.00 |
| 18/32 | 14 | 1 | 1 | 1 | | | 1 | 1 | | | 1 | 1 | | | 1 | 1 | | | 1 | 1 | 1 | | 1 | 1 | | | 1 | 1 | | | 1 | 1 | | +0 | 64.15 |
| 19/32 | 13 | 1 | 1 | 1 | | | 1 | 1 | | 1 | 1 | 1 | | | 1 | 1 | | | 1 | 1 | 1 | | 1 | 1 | | | 1 | 1 | | | 1 | 1 | | +1 | 66.89 |
| 20/32 | 12 | 1 | 1 | 1 | | | 1 | 1 | | 1 | 1 | 1 | | | 1 | 1 | | | 1 | 1 | 1 | | 1 | 1 | | | 1 | 1 | 1 | | 1 | 1 | | +0 | 69.59 |
| 21/32 | 11 | 1 | 1 | 1 | | | 1 | 1 | | 1 | 1 | 1 | | | 1 | 1 | | | 1 | 1 | 1 | | 1 | 1 | 1 | | 1 | 1 | 1 | | 1 | 1 | | −1 | 72.26 |
| 22/32 | 10 | 1 | 1 | 1 | | 1 | 1 | 1 | | 1 | 1 | 1 | | | 1 | 1 | | | 1 | 1 | 1 | | 1 | 1 | 1 | | 1 | 1 | 1 | | 1 | 1 | | +0 | 74.90 |
| 23/32 | 9 | 1 | 1 | 1 | | 1 | 1 | 1 | | 1 | 1 | 1 | | 1 | 1 | 1 | | | 1 | 1 | 1 | | 1 | 1 | 1 | | 1 | 1 | 1 | | 1 | 1 | | +1 | 77.51 |
| 24/32 | 8 | 1 | 1 | 1 | | 1 | 1 | 1 | | 1 | 1 | 1 | | 1 | 1 | 1 | | | 1 | 1 | 1 | | 1 | 1 | 1 | | 1 | 1 | 1 | | 1 | 1 | 1 | +0 | 80.09 |
| 25/32 | 7 | 1 | 1 | 1 | 1 | 1 | 1 | 1 | | 1 | 1 | 1 | | 1 | 1 | 1 | | | 1 | 1 | 1 | | 1 | 1 | 1 | | 1 | 1 | 1 | | 1 | 1 | 1 | −1 | 82.18 |
| 26/32 | 6 | 1 | 1 | 1 | 1 | 1 | 1 | 1 | | 1 | 1 | 1 | | 1 | 1 | 1 | | 1 | 1 | 1 | 1 | | 1 | 1 | 1 | | 1 | 1 | 1 | | 1 | 1 | 1 | +0 | 85.20 |
| 27/32 | 5 | 1 | 1 | 1 | 1 | 1 | 1 | 1 | | 1 | 1 | 1 | | 1 | 1 | 1 | | 1 | 1 | 1 | 1 | 1 | 1 | 1 | 1 | | 1 | 1 | 1 | | 1 | 1 | 1 | +1 | 87.72 |
| 28/32 | 4 | 1 | 1 | 1 | 1 | 1 | 1 | 1 | 1 | 1 | 1 | 1 | | 1 | 1 | 1 | | 1 | 1 | 1 | 1 | 1 | 1 | 1 | 1 | | 1 | 1 | 1 | | 1 | 1 | 1 | +0 | 90.21 |
| 29/32 | 3 | 1 | 1 | 1 | 1 | 1 | 1 | 1 | 1 | 1 | 1 | 1 | | 1 | 1 | 1 | 1 | 1 | 1 | 1 | 1 | 1 | 1 | 1 | 1 | | 1 | 1 | 1 | | 1 | 1 | 1 | −1 | 92.68 |
| 30/32 | 2 | 1 | 1 | 1 | 1 | 1 | 1 | 1 | 1 | 1 | 1 | 1 | | 1 | 1 | 1 | 1 | 1 | 1 | 1 | 1 | 1 | 1 | 1 | 1 | | 1 | 1 | 1 | 1 | 1 | 1 | 1 | +0 | 95.14 |
| 31/32 | 1 | 1 | 1 | 1 | 1 | 1 | 1 | 1 | 1 | 1 | 1 | 1 | | 1 | 1 | 1 | 1 | 1 | 1 | 1 | 1 | 1 | 1 | 1 | 1 | 1 | 1 | 1 | 1 | 1 | 1 | 1 | 1 | +1 | 97.59 |
| 32/32 | 0 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | +0 | 100.00 |

Table III is organised in the same manner as Table II. The difference between standby operation of a copier and a copy run operation mode of a copier is that, in the former, it is not essential that the temperature of the fuser roll 1 be maintained as accurately. Therefore, when the temperature value D is 15, it is permissible to shut off the fuser; this is shown in the first line of Table III. Thus when the temperature value is 15, no half-cycles of the available thirty-two are selected and the power supplied to the heater is 0 percent. When the temperature of the fuser 1 drops to give a temperature value, for example to a value of 14 as shown in the second row, there will be a change from providing zero half-cycles to providing eighteen half-cycles. Thus, the power supplied to the heater 2 may vary between 0 percent and 64.15 percent of the full power for a small temperature change. This should be contrasted with the copy run mode of operation shown in Table II where a similar temperature variation will give a much smaller percentage change, i.e., from 61.39 percent to 64.15 percent.

Referring now to Figures 4A, 4B and 5, Figures 4A and 4B show a block diagram of a programmable machine controller described in detail in our U.S. Patent No. 4,086,658. The processor 33 (Figure 3) includes a microprocessor 170 which is detailed in Figure 4B. The microprocessor 170 is attached to a bus to which is attached read-only store 171, a working memory 172 and input and output registers 173 and 174 useful for communications with external devices such as a temperature sensor 4. A clock 176 provides timing signals. The microprocessor 170 of Figure 4B comprises the circuits necessary to perform instructions in accordance with a program of instructions supplied in binary machine code derived from commands in assembly language as detailed in the referenced patent. The instructions, which determine the movement of data among the registers shown, define operations in the particular processor described in the referenced patent. It is within the scope of the invention to utilise discrete logic design techniques or to substitute another processor for the one shown and to utilise an appropriate instruction language therefor, such as BASIC.

For purposes of completeness, there follows at the end of this description, a listing of source code in assembly language for use with the processor shown in Figures 4A and 4B. The listing organisation is very generally outlined in the flow diagram of Figure 5. The fuser temperature is detected by the sensor 4 by sampling and analog-to-digital conversion. In Figure 5 there is a minor change in that the fuser temperature is sampled after every 64 half-cycles. As previously, the number of the present zero-crossing, that is the half-cycle number indicated in the counter 39, is used as an argument to fetch a value from a table (for example, based on Table I or II) in one of the read-only stores 35 and 36. If the B number obtained from the table is greater than or equal to the present fuser temperature value, the triac 7 is turned on for one half-cycle. If the value is less than the present fuser temperature value, the triac 7 is turned off for a half-cycle. The routine then fetches another B number and, for every 64 fetches, it causes another temperature value sampling.

SOURCE CODE LISTING

```
        FUSETMP   DC     *                              26/11     $$
                  SRG    GRP3                           26/11     $$
                  TPB    RUNBYTES,IGTEMP                26/11     $$
                  BNZ    FUSET20                        26/11     $$
*                                  1. THEN
*                                  2 . . IF THE HALF CYCLE COUNT HAS
*                                        REACHED ITS MAXIMUM MINUS ONE
        SRG     GRP9
        LB      HALFCNT                  (HALFCNT = HALFMAX—5 AT POR)
        CI      HALFMAX—1
        BNE     FUSET2
*                                  2 . . THEN
*                                  3 . . . INCREMENT THE HALF CYCLE
*                                          COUNT;
        A1
        STB     HALFCNT
*                                  3 . . . INCREMENT THE TABLE PASS
*                                          COUNT;
        LB      PASSCNT
        A1
        STB     PASSCNT
*                                  3 . . . IF THE TABLE PASS COUNT IS
*                                          .GE. ITS MAXIMUM
        L1      PASSMAX
        CB      PASSCNT
        BH      FUSET6
*                                  3 . . . THEN
*                                  3 . . . . RESET THE TABLE PASS COUNT:
        CLA
        STB     PASSCNT
*                                  4 . . . . IF THE TEMPERATURE LINES
*                                            ARE ALL ZERO
        LB      TEMPIN
        NB      TEMPIN             (DOUBLE SAMPLE)
        NI      X'OF'
        BNZ     FUSET1
*                                  4 . . . . THEN
*                                  5 . . . . . TURN ON THE TEMPERATURE
*                                              SAMPLE LINE;
        TSB     COLOUT2M,TEMPSAM
        STB     COLOUT2
        B       FUSET6
*                                  4 . . . . ELSE
*                                  5 . . . . . A TEMPERATURE SAMPLE
*                                              FAILURE HAS OCCURRED,
*                                              SET THE FLAG TO
*                                              DISABLE THE MACHINE;
```

SOURCE CODE LISTING (CONTINUED)

```
FUSET1   DC     *
         SRG    GRP3
         TSB    STATUS1,KILL
   *                                  5 . . . . . LOG AN ERROR;
         LI     TEMSAMFE                                                   $$
         BAL    RO,CELOG                                                   $$
   *                                  5 . . . . . USE THE FUSER OVER TEMPERATURE
                                                  31/15
         SRG    GRP16
         TSB    M20,FUSEROT
   *                                  5 . . . . . SET THE MESSAGE CHANGE;
         TSB    MSG,MSGCHG
   *                                  5 . . . . . EXIT THIS ROUTINE;
         B      FUSET20
   *                                  4 . . . . ENDIF;
   *                                  3 . . . ENDIF;
   *                                  2 . . ELSE;
   *                                  3 . . . IF THE HALF CYCLE COUNT HAS
   *                                          REACHED ITS MAXIMUM
FUSET2   DC     *
         CI     HALFMAX
         BNE    FUSET4
   *                                  3 . . . THEN
   *                                  4 . . . . RESET THE HALF CYCLE COUNT;
         CLA
         STB    HALFCNT
   *                                  4 . . . . IF THE TEMPERATURE SAMPLE
   *                                              LINE IS ON
         TPB    COLOUT2M,TEMPSAM
         BZ     FUSET6
   *                                  4 . . . . THEN
   *                                  5 . . . . . LOAD THE DIGITAL
   *                                                TEMPERATURE INPUT BYTE;
         LB     TEMPIN
   *                                  5 . . . . . RESET UPPER FOUR BITS;
         NI     X'OF'
   *                                  5 . . . . . STORE IN THE TEMPERATURE
   *                                                SAMPLE BYTE;
         STB    TEMPBYTE
   *                                  5 . . . . . RESET THE TEMPERATURE
   *                                                SAMPLE LINE;
         TRB    COLOUT2M,TEMPSAM
         STB    COLOUT2
   *                                  5 . . . . . IF THE FUSER TEMP-UP
   *                                                FLAG IS OFF
```

SOURCE CODE LISTING (CONTINUED)

```
          TPB    MCSTAT1,TEMPUP
          BNZ    FUSET6
     *                               5.....THEN
     *                               6......SET THE FUSER TEMPERATURE
     *                                        ENABLE FLAG (INDICATES
     *                                        K1 HAS HAD TIME TO
     *                                        PICK FOLLOWING POR);
          TS     TEMPENAB
          STB    MCSTAT1
     *                               6......IF THE TEMPERATURE UP
     *                                        CONSTANT IS EQUAL TO
     *                                        THE TEMPERATURE SAMPLE
     *                                        BYTE
          LI     RUNTEMP
          CB     TEMPBYTE
          BNE    FUSET6
     *                               6......THEN
     *                               7.......SET THE FUSER TEMP-
     *                                         UP FLAG;
          TSB    MCSTAT1,TEMPUP
     *                               7.......SET THE 'DISPLAY COPY
     *                                         SELECT' FLAG;
          SRG    GRP16
          LB     MSG
          TS     DISPCS
     *                               7.......SET THE MESSAGE CHANGE
     *                                         FLAG;
          TS     MSGCHG
          STB    MSG
          B      FUSET6
     *                               6......ENDIF;
     *                               5.....ENDIF;
     *                               4....ENDIF;
     *                               3...ELSE
     *                               4....INCREMENT THE HALF-
     *                                      CYCLE COUNT;
FUSET4    DC     *
          A1
          STB    HALFCNT
     *                               3...ENDIF;
     *                               2..ELSE
     *                               3...IF THE FUSER TEMPERATURE
     *                                     ENABLE FLAG IS ON
```

SOURCE CODE LISTING (CONTINUED)

```
FUSET6   DC    *
         TPB   MCSTAT1,TEMPENAB
         BZ    FUSET20
  *                                  3 . . . THEN
  *                                  4 . . . . IF THE COPY RUN HAS JUST
  *                                                STARTED OR SHEETS ARE
  *                                                IN THE PATH
         B     FUSET8                TEMPORARY BRANCH
         SRG   GRP1
         TPB   RUNBYTE,RUNIN
         BNZ   FUSET7
  **
  **     BZ    FUSET8
         SRG   GRP29
         LB    PPSTATUS
         NI    P1(EXITBILL,
               DTKEXIT,GATEDTK)
  *                                  4 . . . . THEN
  *                                  5 . . . . . PUT THE STARTING ADDRESS
  *                                                OF THE RUN PRIORITY
  *                                                TABLE IN THE ACCUMULATOR;
FUSET7   DC    *
         LA    RUNTABL
         J     FUSET10
  *                                  4 . . . . ELSE
  *                                  5 . . . . . LOAD THE STARTING
  *                                                ADDRESS OF THE STANDBY
  *                                                PRIORITY TABLE;
FUSET8   DC    *
         LA    STBYTABL
  *                                  4 . . . . ENDIF;
  *                                  4 . . . . ADD THE COUNT FOR THE
  *                                                PRESENT HALF-CYCLE;
FUSET10  DC    *
         SRG   GRP9
         STR   RG9WORK1
         CLA
         LB    HALFCNT
         AR    RG9WORK1
         STR   RG9WORK1
  *                                  4 . . . . FETCH THE PRIORITY OF THE
  *                                            PRESENT HALF-CYCLE
  *                                            FROM THE TABLE;
         LN    RG9WORK1
  *                                  4 . . . . COMPARE WITH THE CURRENT
  *                                              TEMPERATURE SAMPLE BYTE;
```

SOURCE CODE LISTING (CONTINUED)

```
          CB      TEMPBYTE
  **                                  1111 = COLD
  **                                  0000 = HOT
  *                                  4.... IF THE PRIORITY FORM
  *                                         THE TABLE IS .LE. THE
  *                                         TEMPERATURE SAMPLE
  *                                         BYTE
          BH      FUSET12            (CONTINUE WHEN ACCUMULATOR
                                     .LE. DATA)
          NOP
  *                                  4.... THEN
  *                                  5..... TURN ON THE FUSER
  *                                          TRIAC REQUEST FLAG;
          SRG     GRP1
          TSB     STATUS2,FSRRQST
          B       FUSET20
  *                                  4.... ELSE
  *                                  5..... TURN OFF THE FUSER
  *                                          TRIAC;
FUSET12   DC      *
          SRG     GRP1
          TRB     ACOUTM,FSRTRAC
          STB     ACOUT
  *                                  4.... ENDIF;
  *                                  3... ENDIF;
  *                                  2.. ENDIF;
  *                                  1. ENDIF;
FUSET20   DC      *
  *                                   ENDSEGMENT (FUSETMP);
```

**Claims**

1. Electrophotographic copier having an electrically heated fuser (1) and a control apparatus for regulating the temperature of the fuser, the control apparatus including a temperature sensor (4) for sensing the fuser temperature, and pulse generating means for generating a variable number of electrical fuser heating pulses per cycle according to the current sensed fuser temperature, the pulse generating means including a comparator which compares a signal representing the current sensed fuser temperature with a predetermined sequence of signals, one signal of said sequence following the preceding signals of said sequence through the cycle, the comparator causing generation of a fuser heating pulse or not, for each succeeding signal of said sequence, according to the comparison effected by the comparator, characterised in that, for obtaining spreading of the fuser heating pulses throughout the cycle, the pulse generating means (33) includes a store (36) from which each signal of said sequence is read out in digital form in turn, said comparator (32) also being digital and also receiving in digital form a current sensed fuser temperature, for the whole cycle, from a digital latch (31), the values in said store (36) being selected so that the generated fuser heating pulses are always spread throughout the cycle for the different possible sensed fuser temperatures.

2. Electrophotographic copier as claimed in claim 1 including two of said stores (35, 36), said signals being read out from one store or the other depending on the operating mode of the copier.

3. Electrophotographic copier as claimed in claim 1 or 2 in which said fuser heating pulses are positive or negative half-cycles, with minimal overall DC component per cycle.

**Patentansprüche**

1. Elektrophotographisches Kopiergerät mit einem elektrisch beheizten Fixierer (1) und einer Steuervorrichtung zur Regulierung der Temperatur des Fixierers, wobei die Steuervorrichtung einen Temperatursensor (4) zum Abfühlen der Fixierertemperatur und Impulserzeugungsmittel zur Erzeugung einer veränderbaren Anzahl von elektrischen Fixiererheizungsimpulsen pro Zyklus entsprechend der gerade abgefühlten Fixierertemperatur aufweist, wobei die Impulserzeugungsmittel einen Komparator aufweisen, welcher ein die gerade abgefühlte Fixierertemperatur darstellendes Signal mit einer bestimmten Folge von Signalen vergleicht, wobei ein Signal der Folge den vorhergehenden Signalen der Folge über den Zyklus folgt, wobei der Komparator für jedes der aufeinanderfolgenden Signale der Folge entsprechend dem durch den Komparator ausgeführten Vergleich bewirkt, daß ein Fixiererheizimpuls erzeugt wird oder nicht, dadurch gekennzeichnet, daß zur Erzielung einer Verteilung der Fixiererheizimpulse über den Zyklus die Impulserzeugungsmittel (33) einen Speicher (36) enthalten, aus welchem die einzelnen Signale der Folge in digitaler Form der Reihe nach ausgelesen werden, wobei der Komparator (32) ebenfalls digital ist und ebenfalls in digitaler Form eine gerade abgefühlte Fixierertemperatur für den gesamten Zyklus aus einem digitalen Latch-Speicher (31) erhält, wobei die Werte im Speicher (36) so gewählt werden, daß die erzeugten Fixiererheizimpulse für verschiedene mögliche abgefühlte Fixierertemperaturen stets über den Zyklus verteilt sind.

2. Elektrophotographisches Kopiergerät nach Anspruch 1, welches zwei solcher Speicher (35, 36) enthält, wobei die Signale abhängig von der Betriebsweise der Kopiergeräts aus dem einen oder dem anderen der Speicher ausgelesen werden.

3. Elektrophotographisches Kopiergerät nach Anspruch 1 oder 2, bei welchem die Fixiererheizimpulse positive oder negative Halbperioden mit minimaler Gesamtgleichspannungskomponente pro Periode sind.

**Revendications**

1. Copieur électrophotographique comprenant un dispositif de fusion chauffé électriquement (1), et un appareil de commande servant à réguler la température du dispositif de fusion, l'appareil de commande comprenant un capteur de température (4) destiné à capter la température du dispositif de fusion, et les moyens générateurs d'impulsions servant à engendrer un nombre variable d'impulsions de chauffage du dispositif de fusion électrique par cycle selon la température actuelle captée du dispositif de fusion, les moyens générateurs d'impulsions comprenant un comparateur qui compare un signal représentant la température actuelle captée du dispositif de fusion à une série prédéterminée de signaux, un signal de ladite série suivant les signaux précédents de ladite série dans le cycle, le comparateur provoquant la génération d'une impulsion de chauffage du dispositif de fusion ou non, pour chaque signal suivant de ladite série, en fonction de la comparaison effectuée par le comparateur, caractérisé en ce que, pour obtenir un étalement des impulsions de chauffage du dispositif de fusion sur tout le cycle, les moyens générateurs d'impulsions (33) comprennent une mémoire (36) dans laquelle chaque signal de ladite séquence est lue tour à tour sous une forme numérique, ledit comparateur (32) étant également numérique et recevant également sous forme numérique une température actuelle captée du dispositif de fusion, pendant tout le cycle, en provenance d'un étage de blocage numérique (31), les valeurs contenues dans ladite mémoire (36) étant sélectionnées de telle façon que les impulsions de chauffage du dispositif de fusion engendrées soient toujours étalées sur tout le cycle pour les différentes températures captées possibles du dispositif de fusion.

2. Copieur électrophotographique selon la revendication 1, comprenant deux mémoires (35, 36), lesdits signaux étant lus dans une mémoire ou dans l'autre selon le mode de fonctionnement du copieur.

3. Copieur électrophotographique selon la revendication 1 ou 2, dans lequel lesdites impulsions de chauffage du dispositif de fusion sont des demipériodes positives ou négatives, avec une composante continue globale minime par cycle.

FIG. 1

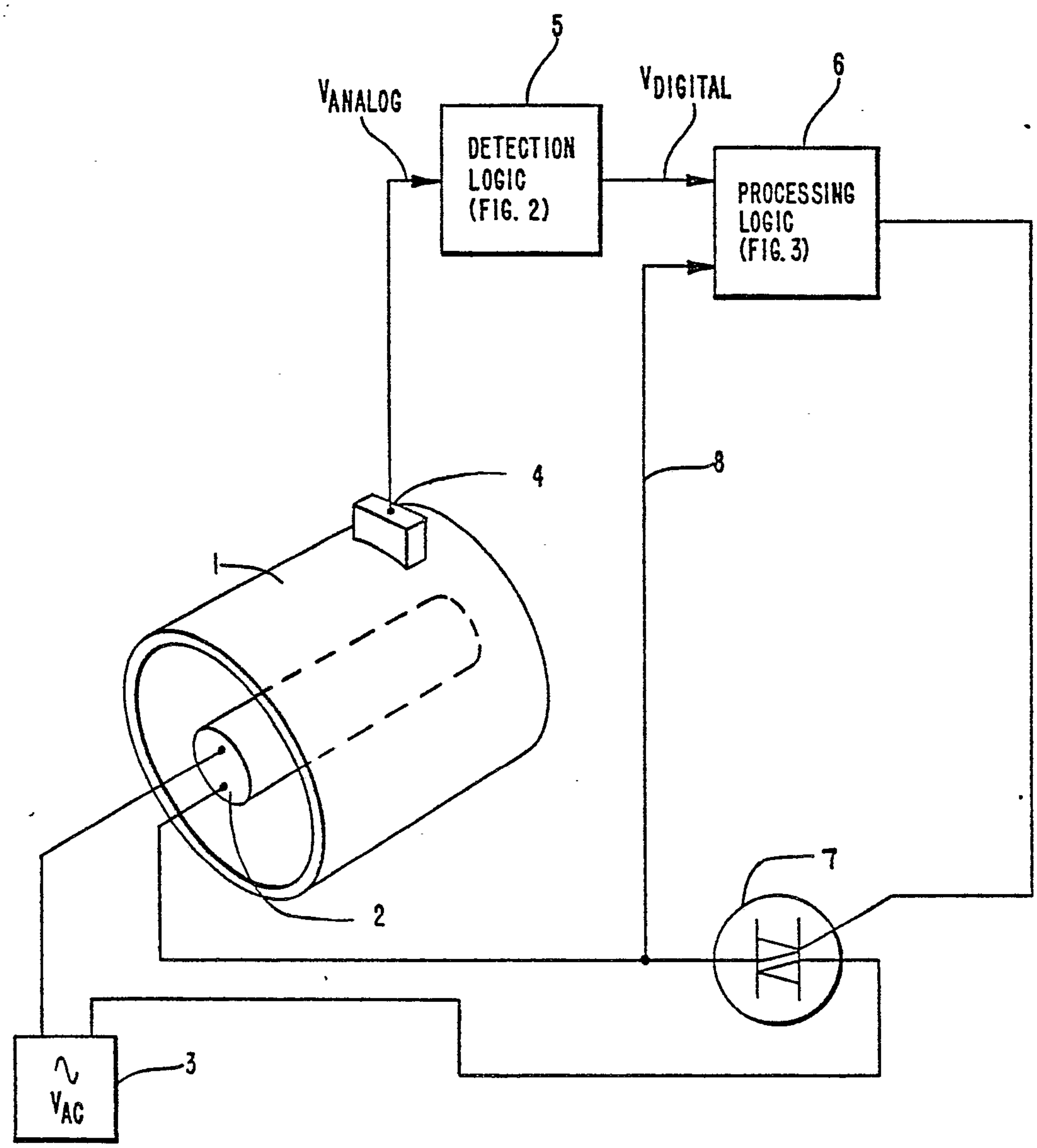
VANALOG
5
DETECTION LOGIC (FIG. 2)
VDIGITAL
6
PROCESSING LOGIC (FIG. 3)
4
1
8
2
7
VAC
3

FIG. 2

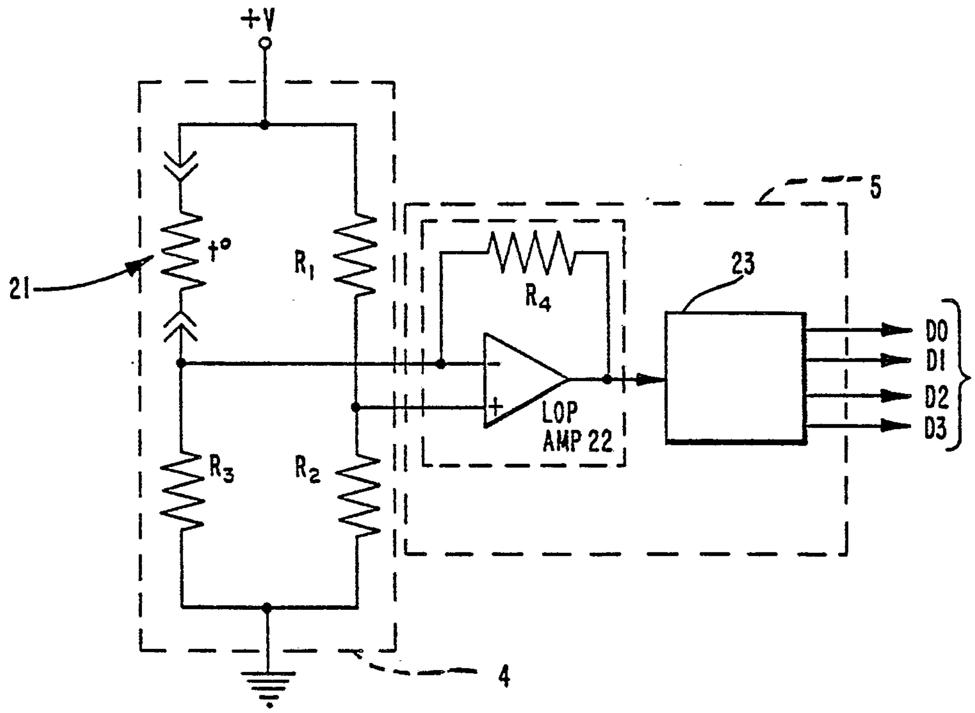

FIG. 3

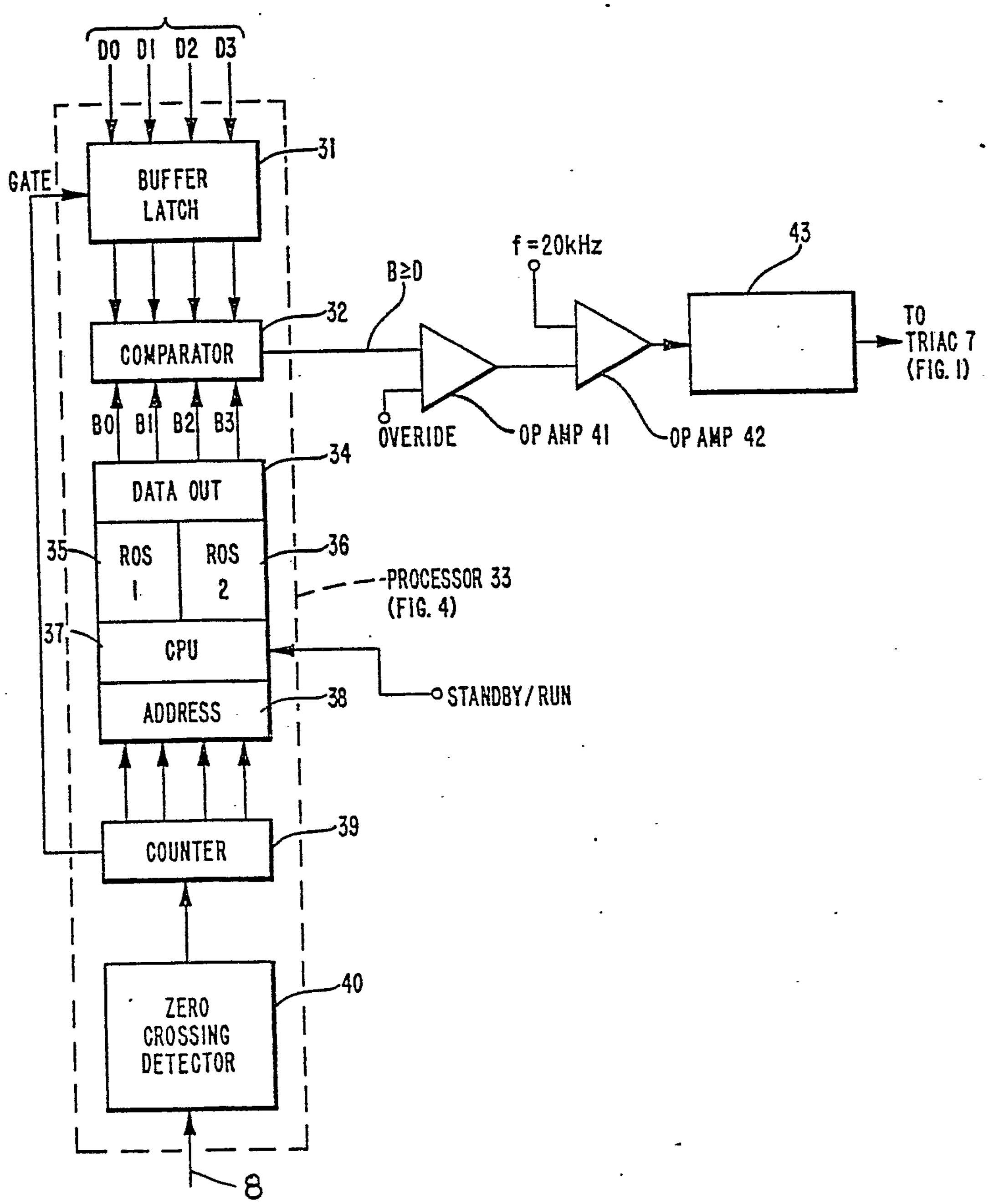
D0 D1 D2 D3
GATE
BUFFER LATCH
31
COMPARATOR
32
B≥D
f =20kHz
43
TO TRIAC 7 (FIG. 1)
B0 B1 B2 B3
OVERIDE
OP AMP 41
OP AMP 42
DATA OUT
34
35
ROS 1
ROS 2
36
PROCESSOR 33 (FIG. 4)
37
CPU
STANDBY/RUN
ADDRESS
38
COUNTER
39
ZERO CROSSING DETECTOR
40
8

FIG. 4A

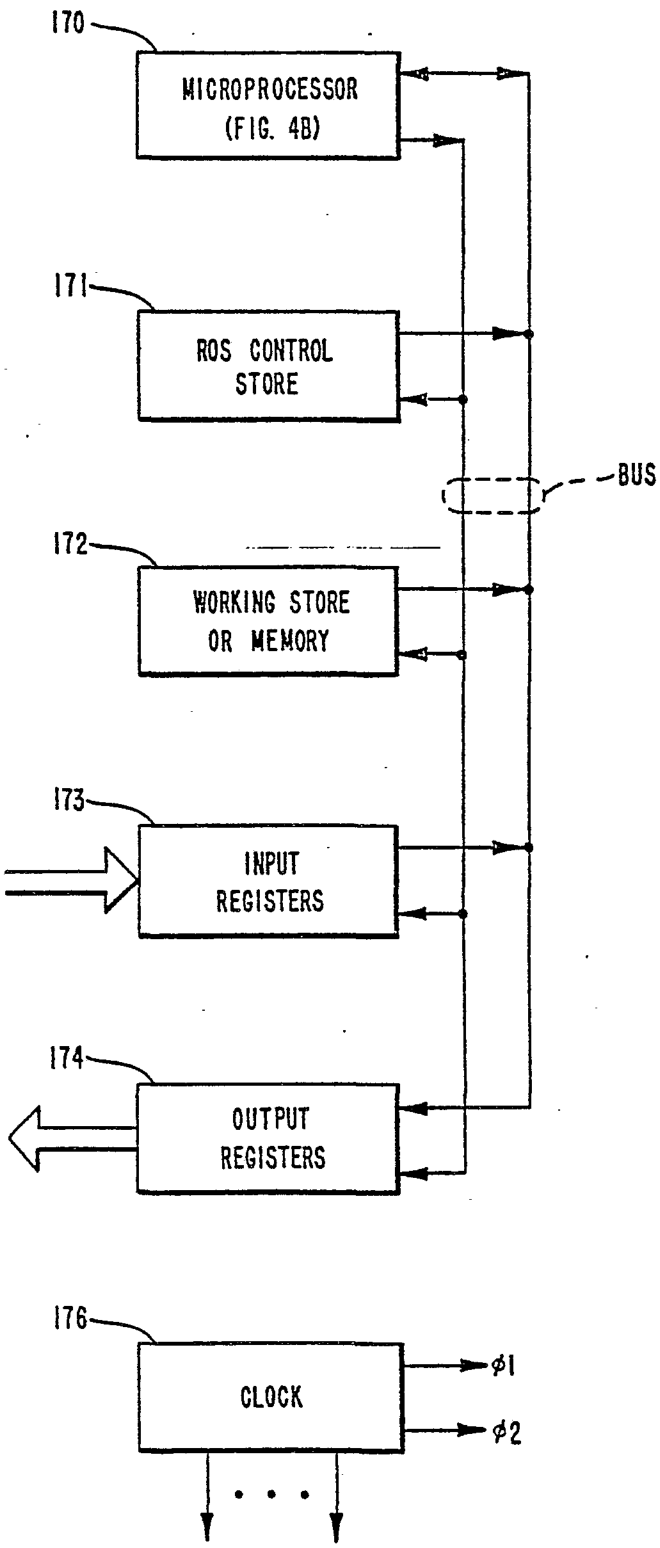
170
MICROPROCESSOR (FIG. 4B)
171
ROS CONTROL STORE
BUS
172
WORKING STORE OR MEMORY
173
INPUT REGISTERS
174
OUTPUT REGISTERS
176
CLOCK
φ1
φ2

FIG. 4B

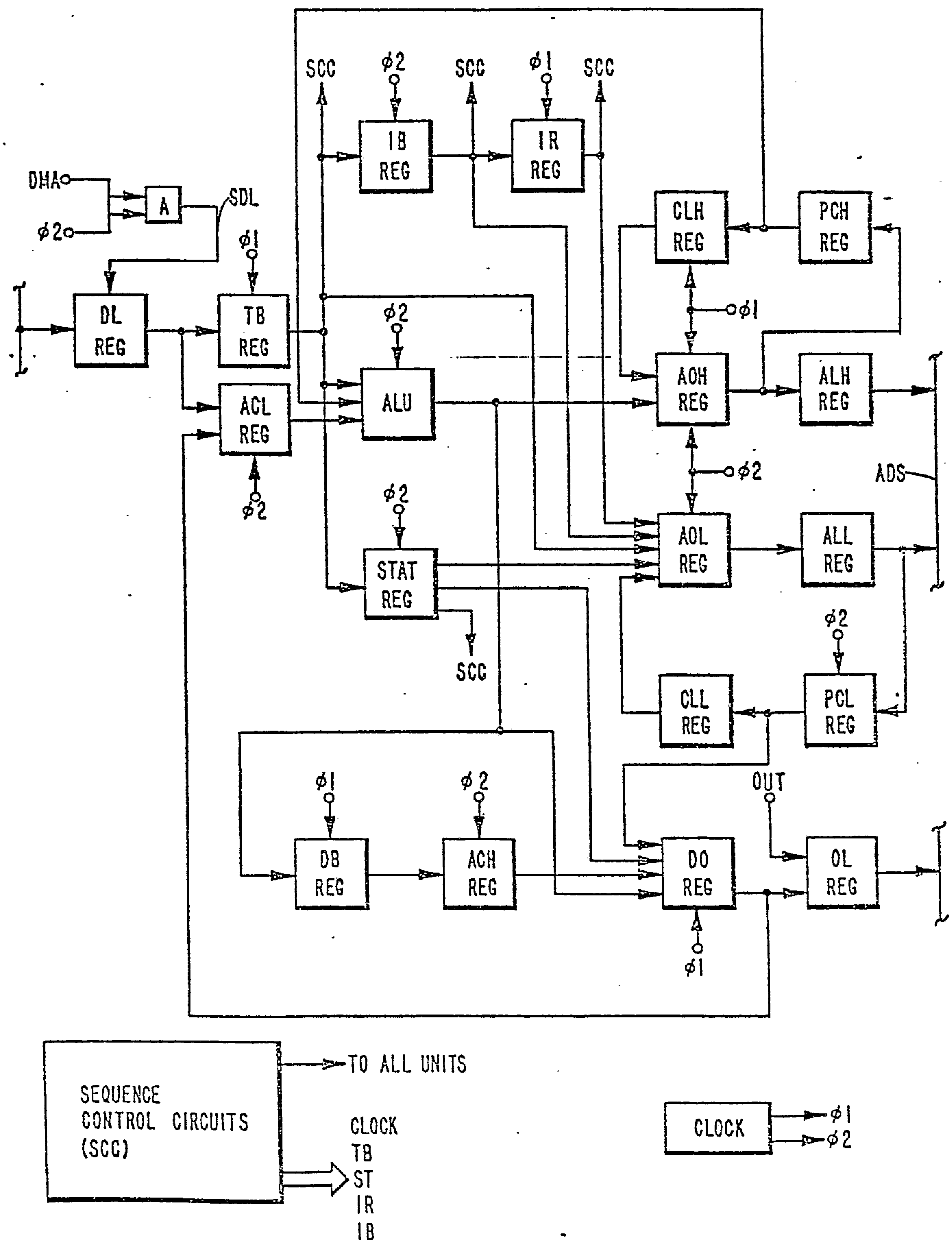
SCC
φ2
SCC
φ1
SCC
IB REG
IR REG
DHA
φ2
A
SDL
φ1
CLH REG
PCH REG
DL REG
TB REG
φ1
φ2
ALU
AOH REG
ALH REG
ACL REG
φ2
φ2
ADS
φ2
STAT REG
AOL REG
ALL REG
SCC
φ2
CLL REG
PCL REG
OUT
φ1
φ2
DB REG
ACH REG
DO REG
OL REG
φ1
SEQUENCE CONTROL CIRCUITS (SCC)
TO ALL UNITS
CLOCK
TB
ST
IR
IB
CLOCK
φ1
φ2

FIG. 5

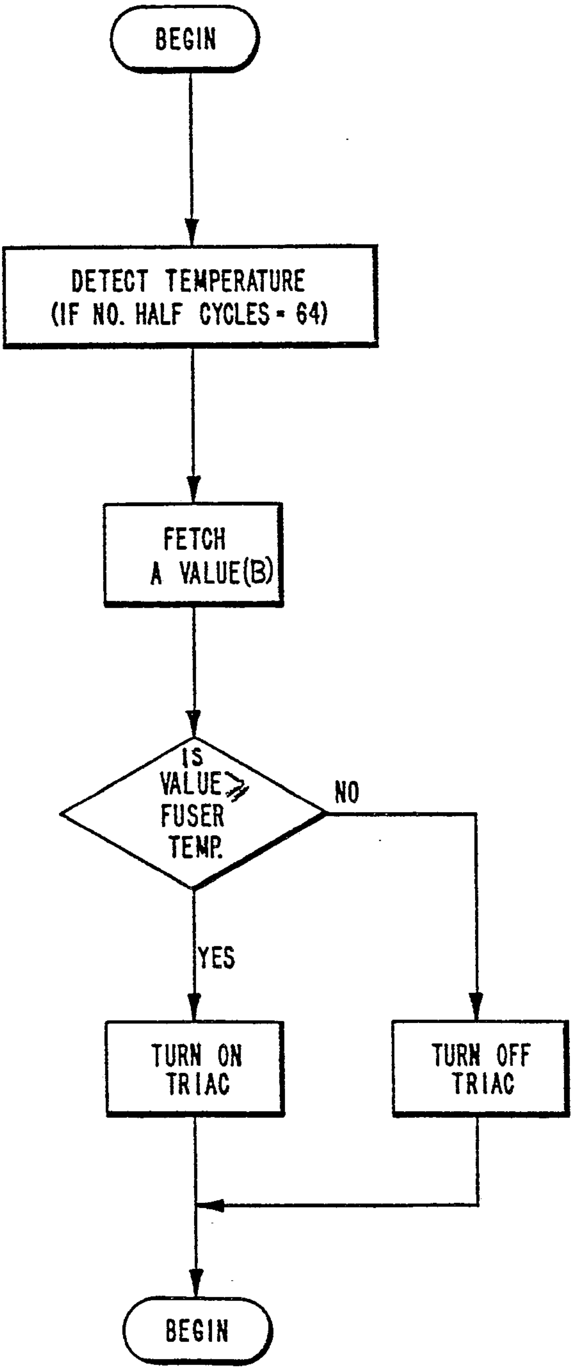
BEGIN
DETECT TEMPERATURE
(IF NO. HALF CYCLES = 64)
FETCH
A VALUE(B)
IS
VALUE ≥
FUSER
TEMP.
NO
YES
TURN ON
TRIAC
TURN OFF
TRIAC
BEGIN